# EUROPEAN PATENT APPLICATION

(11) **EP 4 498 483 A1**
(43) Date of publication of application: **29.01.2025**
(21) Application number: 23216157.0
(22) Date of filing: 13.12.2023
(51) Int. Cl.: H01M 50/107, H01M 50/169, H01M 50/502, B23K 26/20, B23K 26/244

(54) **CYLINDRICAL BATTERY CELL AND BATTERY PACK**

(30) Priority: 25.07.2023 CN 202321962888 U
(71) Applicant: AESC Japan Ltd., Yokohama-Shi, Kanagawa 220-0012 (JP)
(72) Inventor: HUANG, Qiu, Jiangyin City, Wuxi City, 214443 (CN); GONG, Zhijie, Jiangyin City, Wuxi City, 214443 (CN); QIAN, Jia, Jiangyin City, Wuxi City, 214443 (CN); CHE, Peipei, Jiangyin City, Wuxi City, 214443 (CN)
(74) Representative: Becker, Eberhard

(57) **Abstract**

A cylindrical battery cell (100) including a housing (110), an electrode assembly (120) disposed in the housing (110), a cap (140) and a current collecting component (130) is provided. The housing (110) includes an end wall (111) and a side wall (112). An opening (113) is formed on one side of the side wall (112) facing away from the end wall (111). A first tab (121) is provided on one side of the electrode assembly (120) facing the opening (113). The cap (140) is disposed on a side where the opening (113) located and is welded to the side wall (112). The current collecting component (130) is disposed on one side of the electrode assembly (120) facing the opening (113) and is welded to the first tab (121). The current collecting component (130) includes a current collecting body (133) and a thickened portion (131) welded to the cap (140).

## Description

### BACKGROUND

### Technical Field

The disclosure relates to the field of battery technology, specifically to a cylindrical battery cell, a battery pack and an electronic device.

### Description of Related Art

The cylindrical battery cell mainly consists of a housing and an electrode assembly, a positive electrode terminal, a current collecting component and an end cover disposed in the housing. In the related art, the cap normally serves as the negative electrode of the cylindrical battery cell. The specific method is to connect the cap to the current collecting component and the housing. Generally, the thickness of the cap is greater than the thickness of the current collecting component. Therefore, when laser penetration welding is performed to connect the cap and the current collecting component, there is a high level of difficulty in the welding, and welding penetration or false welding are likely to occur. Accordingly, the process window in welding is low and the defect rate of welding is high.

### SUMMARY

In view of the above shortcomings of the related art, the present disclosure provides a cylindrical battery cell, a battery pack and an electronic device to solve the technical problems of low process window in welding and high defect rate encountered when welding is performed to connect the cap and the current collecting component.

In order to achieve the above purpose and other related purposes, the present disclosure provides a cylindrical battery cell, including: a housing, an electrode assembly, a cap and a current collecting component. The housing includes an end wall and a side wall surrounding the end wall. An opening is formed on one side of the side wall facing away from the end wall. The electrode assembly is disposed in the housing, and a first tab is provided on one side of the electrode assembly facing the opening. The cap is disposed on a side where the opening located, and is welded and connected to the side wall to seal the opening. The current collecting component is disposed on one side of the electrode assembly facing the opening, and the current collecting component is welded and connected to the first tab. In the thickness direction of the current collecting component, the current collecting component includes a current collecting body and a thickened portion protruding toward the cap, and the thickened portion is welded and connected to the cap.

In an example of the cylindrical battery cell of the present disclosure, the thickened portion is disposed in the central region of the current collecting component.

In an example of the cylindrical battery cell of the present disclosure, in the thickness direction of the current collecting component, the projection of the thickened portion on the electrode assembly is located in a region with the center of the electrode assembly as the center and having a diameter of 18 mm.

In an example of the cylindrical battery cell of the present disclosure, the current collecting body and the thickened portion are an integrally formed structure.

In an example of the cylindrical battery cell of the present disclosure, the current collecting body and the thickened portion are welded and connected.

In an example of the cylindrical battery cell of the present disclosure, in the thickness direction of the current collecting component, the thickness between one end of the current collecting component close to the electrode assembly and one end where the thickened portion is welded to the cap is 0.3 mm to 2 mm.

In an example of a cylindrical battery cell of the present disclosure, the thickened portion is disposed on one side of the current collecting body away from the electrode assembly.

In an example of the cylindrical battery cell of the present disclosure, in the thickness direction of the current collecting body, the thickened portion penetrates through the current collecting body.

In an example of the cylindrical battery cell of the present disclosure, the current collecting component or the thickened portion is made of low carbon steel.

In an example of the cylindrical battery cell of the present disclosure, the center of the cap includes a liquid injection hole, and the center of the current collecting component includes an opening corresponding to the liquid injection hole, and the cylindrical battery cell further includes a cover plate disposed above the cap. The cover plate is welded and connected to the cap to seal the liquid injection hole.

In an example of the cylindrical battery cell of the present disclosure, the cover plate covers the welding connection region between the cap and the thickened portion.

In an example of the cylindrical battery cell of the present disclosure, in the thickness direction of the cap, the cap includes a recessed portion that is recessed toward the current collecting component, and the recessed portion is welded and connected to the thickened portion.

In an example of the cylindrical battery cell of the present disclosure, in the thickness direction of the current collecting component, the projection of the thickened portion covers the projection of the recessed portion.

In an example of the cylindrical battery cell of the present disclosure, at least a part of the lower surface of the cap located at the outer periphery is in contact with the end surface of the side wall for welding connection. Moreover, in the thickness direction of the cap, an annular groove that is recessed toward the electrode assembly side is further disposed at the outer periphery of the cap. A side wall of the annular groove away from the center of the cap is in contact with the inner surface of the side wall for welding connection.

In an example of the cylindrical battery cell of the present disclosure, the bottom wall of the annular groove is in contact with the current collecting component.

In an example of the cylindrical battery cell of the present disclosure, the thickened portion is disposed at an outer periphery region of the current collecting component, and the bottom wall of the annular groove is in contact with the thickened portion for welding connection.

In an example of the cylindrical battery cell of the present disclosure, the cylindrical battery cell further includes an annular cover plate, and the annular cover plate is disposed above the annular groove to cover the annular groove.

In an example of the cylindrical battery cell of the present disclosure, a venting notch is further disposed on the cap.

In an example of the cylindrical battery cell of the present disclosure, a second tab is provided on one side of the electrode assembly facing the end wall, and the cylindrical battery cell further includes an electrode terminal protruding from the outer surface of the end wall. The electrode terminal is electrically connected to the second tab, and a liquid injection hole is disposed on the end wall or the electrode terminal.

The disclosure further provides a battery pack, which includes the above-mentioned cylindrical battery cell according to any one of the examples.

The disclosure further provides an electronic device, which includes the above-mentioned battery pack.

In the cylindrical battery cell of this disclosure, the cap is sealed and welded to the side wall of the housing, and the cap is welded and connected to the current collecting component. In such configuration, the crimp sealing process of housing is omitted, which not only makes it possible to reduce the risk of failure in welding and connecting the current collecting component in the crimp sealing process, but also reduces the space occupied by the rolling groove in the housing, thereby improving the utilization of the internal space of the battery cell. In the meantime, in the cylindrical battery cell of the present disclosure, by disposing a thickened portion on the current collecting component, the thickness of the current collecting component at the position of welding with the cap is increased, thus reducing the risk of false welding or welding penetration at the welding position during laser penetration welding. In this way, it is possible to reduce the difficulty of welding the current collecting component and the cap, and solve the problem of low process window in welding, as well as reduce the defect rate of welding the cap and the current collecting component. In the meantime, the configuration of the thickened portion may also effectively reduce the heat generated during the welding process of the current collecting component and the cap to be transmitted to the electrode assembly, and therefore there is less thermal impact on the electrode assembly. Additionally, the thickened portion is in contact with a part of the region of the cap, so that there is a better adhesion in the contact surface therebetween. In this way, it is possible to further reduce the chance of false welding and missing welding when performing welding to connect the current collecting component and the cap, and therefore the welding quality may be improved, and the defect rate of welding may be reduced.

### BRIEF DESCRIPTION OF THE DRAWINGS

In order to explain the embodiments of the present disclosure or the technical solutions in the related art more clearly, the drawings needed to be used in the description of the embodiments or the related art will be briefly introduced below. Clearly, the drawings in the following description are only some embodiments of the present disclosure. For those of ordinary skill in the art, other drawings may be obtained based on these drawings without exerting creative efforts.
FIG. 1 is an overall three-dimensional schematic view of an embodiment of a cylindrical battery cell of the present disclosure.
FIG. 2 is a cross-sectional view of an overall structure of an embodiment of the cylindrical battery cell of the present disclosure.
FIG. 3 is a partial enlarged view of a region A in FIG. 2.
FIG. 4 is a schematic view showing the manner of welding the current collecting body and the thickened portion in an embodiment of the cylindrical battery cell of the present disclosure.
FIG. 5 is a schematic view showing the manner of welding the current collecting body and the thickened portion in another embodiment of the cylindrical battery cell of the present disclosure.
FIG. 6 is a schematic structural view of a liquid injection hole opened in the center of the cap in an embodiment of the cylindrical battery cell of the present disclosure.
FIG. 7 is a three-dimensional schematic view of the cap in an embodiment of the cylindrical battery cell of the present disclosure.
FIG. 8 is a cross-sectional view of the overall structure of the cap in an embodiment of the cylindrical battery cell of the present disclosure.
FIG. 9 is a schematic structural view of the thickened portion disposed at the outer periphery of the current collecting component in an embodiment of the cylindrical battery cell of the present disclosure.
FIG. 10 is a schematic structural view of a liquid injection hole opened on the end wall side of the housing in an embodiment of the cylindrical battery cell of the present disclosure.
FIG. 11 is a schematic view of the overall structure of an embodiment of the battery pack of the present disclosure.
FIG. 12 is a schematic structural view of the battery pack of the present disclosure disposed on a vehicle.

### DESCRIPTION OF THE EMBODIMENTS

The following describes the implementation of the present disclosure through specific examples. Those skilled in the art can easily understand other advantages and effects of the present disclosure from the contents disclosed in this specification. The present disclosure can also be implemented or applied through other different specific implementations. Various details in this specification can also be modified or changed in various ways based on different viewpoints and applications without departing from the spirit of the present disclosure. It should be noted that, as long as there is no conflict between the embodiments, the following embodiments and the features in the embodiments may be combined with each other. It should also be understood that the terminology used in the embodiments of the present disclosure is for describing specific embodiments, but not for limiting the scope of the present disclosure. Test methods without specifying specific conditions in the following examples usually adopt conventional conditions or conditions recommended by various manufacturers.

When an embodiment provides a numerical range, it should be understood that, unless otherwise stated in the present disclosure, the two endpoints of each numerical range and any value between the two endpoints may be selected. Unless otherwise defined, all technical and scientific terms used in the present disclosure are consistent with the knowledge of the related art and the description of the present disclosure by those skilled in the art. They may also be used with the methods and methods described in the embodiments of the present disclosure. Equipment and materials are similar or equivalent to any methods, equipment and materials of the related art to implement the present disclosure.

It should be noted that terms such as "upper", "lower", "left", "right", "middle" and "one" cited in this specification are only for convenience of description and are not used to limit the scope of this specification. As for the implementable scope of the disclosure, changes or adjustments in the relative relationships shall also be regarded as the implementable scope of the disclosure, provided there is no substantial change in the technical content.

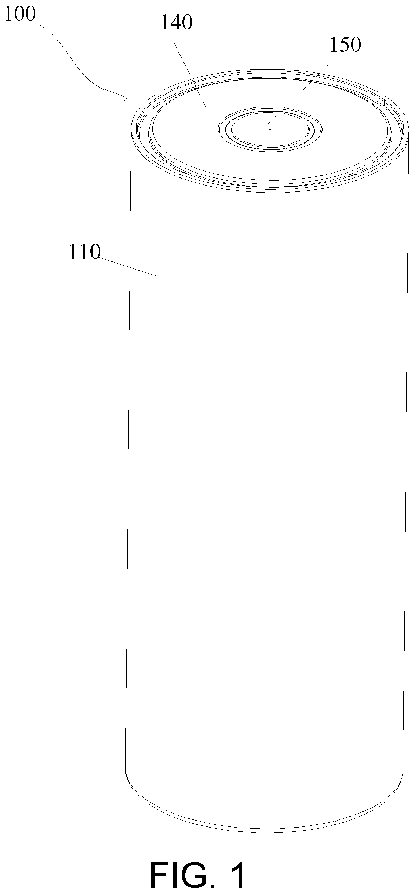

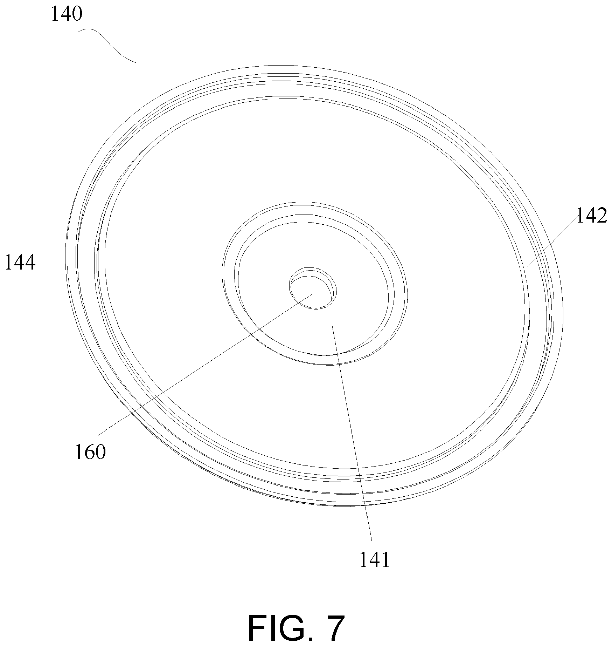

Please refer to FIG. 1 to FIG. 12. The disclosure provides a cylindrical battery cell 100, a battery pack and an electronic device. In the cylindrical battery cell 100, a thickened portion 131 is disposed on the current collecting component 130, thereby increasing the thickness of the current collecting component 130 at the position of welding with the cap 140, thus reducing the chance of false welding or welding penetration at the welding position during laser penetration welding. In this way, it is possible to effectively reduce the difficulty of welding the current collecting component 130 and the cap 140, and solve the problem of low process window in welding, as well as reduce the defect rate of welding the cap 140 and the current collecting component 130.

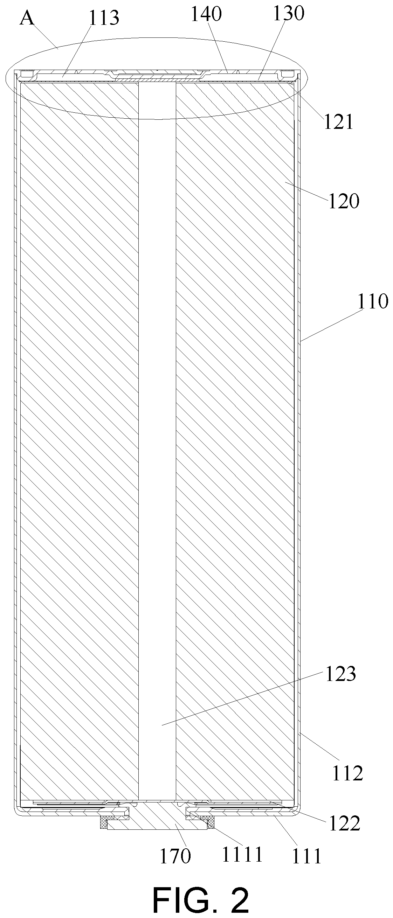

FIG. 1 and FIG. 2 further illustrate the structure of the cylindrical battery cell 100. The cylindrical battery cell 100 includes: a housing 110, an electrode assembly 120, a current collecting component 130, a cap 140 and a cover plate 150. An accommodation cavity is formed in the housing 110 for accommodating the electrode assembly 120, electrolyte (not shown) and other components. The housing 110 may be open at one end or open at two ends. The specific size of the housing 110 may be determined according to the specific size of the electrode assembly 120. For example, the specific size of the housing 110 may satisfy 4680, 4695, 46120 and other specifications of a large cylindrical battery. The housing 110 may be made of a variety of materials, such as copper, iron, aluminum, steel, aluminum alloy, etc. In order to prevent the housing 110 from rusting after being used for a long time, the surface of housing 110 may also be plated with a layer of anti-rust material, such as nickel. Please refer to FIG. 2. In an example of the cylindrical battery cell 100 of the present disclosure, the housing 110 includes an end wall 111 and a side wall 112 surrounding the end wall 111. The end wall 111 is a closed end, and the opening 130 opposite to the end wall 111 is an open end. The end wall 111 and the side wall 112 may be integrally formed and connected, or they may be formed separately and then welded and connected.

As shown in FIG. 2, the electronic assembly 120 is accommodated in the housing 110. The electrode assembly 120 is a component in the battery cell where electrochemical reactions occur. The housing 110 may include one or more electrode assemblies 120. The electrode assembly 120 is mainly formed by winding or stacking positive electrode sheets and negative electrode sheets, and normally a separator is disposed between the positive electrode sheet and the negative electrode sheet. The positive electrode sheet includes a positive electrode current collecting body and a positive electrode active material layer. The positive electrode active material layer is coated on the surface of the positive electrode current collecting body. The positive electrode current collecting body includes a positive electrode coating region and a positive electrode tab connected to the positive electrode coating region. The positive electrode coating region is coated with the positive electrode active material layer, and the positive electrode tab is not coated with the positive electrode active material layer. The negative electrode sheet includes a negative electrode current collecting body and a negative electrode active material layer. The negative electrode active material layer is coated on the surface of the negative electrode current collecting body; the negative electrode current collecting body includes a negative electrode coating region and a negative electrode tab connected to the negative electrode coating region. The negative electrode coating region is coated with the negative electrode active material layer and the negative electrode tab is not coated with the negative electrode active material layer. Taking lithium-ion batteries as an example, the material of the positive electrode current collecting body may be aluminum, and the positive electrode active material layer includes a positive electrode active material. The positive electrode active material may be lithium cobalt oxide, lithium iron phosphate, ternary lithium or lithium manganate, etc. The material of the negative electrode current collecting body may be copper, and the negative electrode active material layer may include a negative electrode active material. The negative electrode active material may be carbon, silicon, or the like. The material of the separator may be PP (polypropylene) or PE (polyethylene), etc. In order to protect and insulate the battery cell, the battery cell may also be covered with an insulating film. The insulating film may be synthesized from PP, PE, PET, PVC or other polymer materials.

Please refer to FIG. 2. In an example of the cylindrical battery cell 100 of the present disclosure, the electrode assembly 120 is sealed and disposed in the housing 110. A first tab 121 and a second tab 122 are respectively provided at two ends in the length direction of the electrode assembly 120, and the first tab 121 and the second tab 122 have opposite polarities, wherein the first tab 121 faces the opening 113 of the housing 110 and the first tab 121 is a negative electrode tab. It should be noted that in other embodiments, the first tab 121 may also be a positive electrode tab, and the second tab 122 may be a negative electrode tab.

Please refer to FIG. 2. In an example of the cylindrical battery cell 100 of the present disclosure, a through terminal mounting hole 1111 is opened on the end wall 111 of the housing 110. The electrode terminal 170 is disposed in the terminal mounting hole 1111 in a sealed and insulating manner. As long as the electrode terminal 170 is sealed and insulated from the end wall 111, there is no limitation to the method of disposing the electrode terminal 170 on the end wall 111. A second tab 122 is disposed on one side of the electrode assembly 120 facing the end wall 111. One end of the electrode terminal 170 may be directly welded and connected to the second tab 122, or may be conductively connected to the second tab 122 through the current collecting component 130. No further specific limitation is applied in the disclosure.

Please refer to FIG. 1 to FIG. 3. In an example of the cylindrical battery cell 100 of the present disclosure, the current collecting component 130 is disposed in the housing 110 and is located on one side of the electrode assembly 120 facing the opening 113. The current collecting component 130 is welded and connected to the first tab 121. There is no limitation to the specific position where the current collecting component 130 and the first tab 121 are welded and connected and the welding area of the two as long as the stable electrical connection between the current collecting component 130 and the first tab 121 can be achieved. The cap 140 is disposed on the opening 113 side of the housing 110, and is located on one side of the current collecting component 130 away from the electrode assembly 120; the outer periphery of the cap 140 is welded and connected to the side wall 112 of the housing 110, so that the cap 140 is connected to the opening 113 of the housing 110 in a sealed manner. There is no limitation to form the structure of the welded and connected outer periphery of the cap 140 and the side wall 112 of the housing 110 as long as the requirements of welding and connecting the housing 110 and the cap 140 can be met. The current collecting component 130 includes a current collecting body 133 and a thickened portion 131 protruding toward the cap 140. The thickened portion 131 is electrically connected to the current collecting body 133. There is no limitation to the electrical connection method, which may be welded connection, integrated connection, or riveted connection or any connection method that satisfy the conduction requirement. One end of the thickened portion 131 away from the current collecting body 133 is welded and connected to one end of the cap 140 facing the electrode assembly 120 side. In an embodiment of the present disclosure, there is no limitation to the specific position of the thickened portion 131 on the current collecting body 133. For example, the thickened portion 131 may be disposed in the central region of the current collecting body 133, or may be disposed in the periphery region of the current collecting body 133 as long as the disposing position of the thickened portion 131 satisfies the requirements of the welding connection strength and current diversion for the thickened portion 131 and the cap 140. In addition, in this embodiment, there is no specific limitation to the shape of the thickened portion 131, for example, the shape of the thickened portion 131 may be any shape such as a disc shape, an annular shape, or a rectangular shape as long as the shape of the thickened portion 131 satisfies the requirement of welding connection and current diversion.

When assembling conventional cylindrical battery cells, it is normally required to process rolling grooves on the side walls of the housing, then weld and connect the current collecting component to the rolling grooves, and finally seal and fix the cap at the opening of the housing through the crimp sealing process. During the crimp sealing operation, the welding plane between the rolling groove and the current collecting component is pulled very often, causing damage to the weld and affecting the conductive performance of the cylindrical battery cell. In the meantime, the rolling groove will also occupy the radial and axial space of the housing, and the utilization of space inside the battery cell is reduced.

In an embodiment of the present disclosure, the conductive connection between the electrode assembly 120 and the housing 110 and the fixation of the cap 140 at the opening 113 of the housing 110 are achieved by welding the outer periphery of the cap 140 to the side wall 112 of the housing 110, and welding the cap 140 to the thickened portion 131 of the current collecting component 130. In such configuration, mechanical sealing processes such as rolling grooves and crimp sealing are not involved in the assembly process of the battery cell, which will not affect the conduction between the current collecting component 130 and housing 110. Therefore, not only that it is possible improve the stability of the conductive performance of the cylindrical battery cell 100, but also it is possible to improve the utilization of internal space of the cylindrical battery cell 100, thereby increasing the volumetric energy density of the battery cell. In the meantime, by disposing the thickened portion 131 on the current collecting component 130, the thickness of the current collecting component 130 at the position of welding with the cap 140 is increased, thus reducing the chance of false welding or welding penetration that often occurs at the welding position during laser penetration welding. In this way, it is possible to effectively reduce the difficulty of welding the current collecting component 130 and the cap 140, and solve the problem of low process window in welding, as well as improve the welding quality and reduce the defect rate of welding the cap 140 and the current collecting component 130. In the meantime, the configuration of the thickened portion 131 may also effectively reduce the heat generated during the welding process of the current collecting component 130 and the cap 140 to be transmitted to the electrode assembly 120, and therefore there is less thermal impact on the electrode assembly 120. Additionally, the thickened portion 131 is in contact with a part of the region of the cap 140, so that there is a better adhesion in the contact surface therebetween. In this way, it is possible to further reduce the chance of false welding and missing welding when performing welding to connect the current collecting component 130 and the cap 140, and therefore the welding quality may be improved, and the defect rate of welding may be reduced.

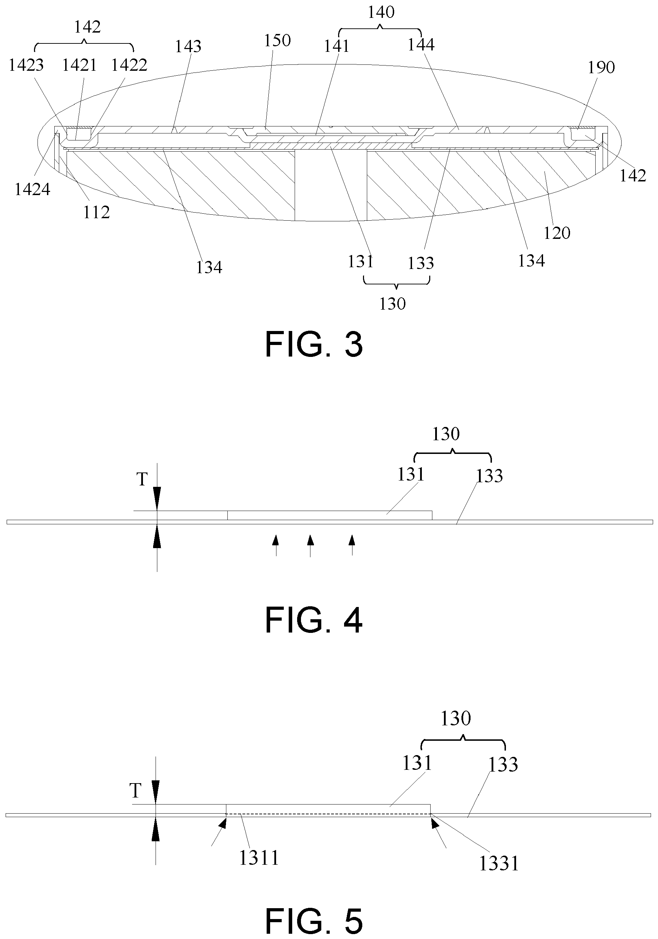

Please refer to FIG. 3 to FIG. 5. In an example of the cylindrical battery cell 100 of the present disclosure, the thickened portion 131 is located in the central region of the current collecting component 130. The thickened portion 131 may have a variety of shapes, such as a disk, annular, or a rectangle as long as the shape of the thickened portion 131 meets the requirements of mechanical connection strength and current diversion for the cap 140 and the current collecting component 130. By disposing the thickened portion 131 in the central region of the current collecting body 133, the welding region of cap 140 corresponding to thickened portion 131 is also located in the central region of cap 140. In this way, in the welding process, the entire welding process may be completed by simply moving the welding head back and forth in the central region of the cap 140, thereby obtaining a better welding path and improving the efficiency of welding the cap 140 and the current collecting component 130. In another embodiment of the present disclosure, the thickened portion 131 is a cylindrical structure, and the thickened portion 131 and the cap 140 are coaxially disposed. With such configuration, it is easy to position the thickened portion 131 and the cap 140 in the circumferential direction during welding, thereby improving the efficiency of welding the cap 140 and the current collecting component 130.

Please refer to FIG. 3. In an example of the cylindrical battery cell 100 of the present disclosure, the current collecting component 130 further includes a tab welding region 134. The tab welding region 134 is disposed around the current collecting body 133. Moreover, in the thickness direction of the current collecting component 130, the projection of the thickened portion 131 on the electrode assembly 120 is located in region with the center of the electrode assembly 120 as the center and having a diameter of 18 mm. In order to improve the stability and reliability of the welding connection between the current collecting component 130 and the electrode assembly 120, the tab welding region 134 is generally set in a region where the stack of tabs is thick. It may be learned from the tab preparation process that in region with the center of the electrode assembly 120 as the center and having a diameter of 18 mm, the number of the stack of the tabs is few and the thickness of the stack of tabs is thin, so such region is not suitable to be used as the tab welding region 134. Therefore, disposing the thickened portion 131 in this region may achieve partition configuration between the tab welding region 134 and the welding region of the cap 140. In this way, the welding area of the tab welding region 134 will not be influenced, and the tab welding region 134 will not interfere with the welding region of the cap 140. In the meantime, it is also possible to solve the problem of heat concentration during the welding process of the current collecting component 130, reduce the deformation of the current collecting component 130 during the welding process, and improve the stability of the conductive connection of the current collecting component 130.

In an embodiment of the present disclosure, there is no limitation to the method of connecting the current collecting body 133 and the thickened portion 131, which may be welded connection, integrated connection, or riveted connection, for example. Specifically, in an example of the cylindrical battery cell 100 of the present disclosure, the current collecting body 133 and the thickened portion 131 are an integrally formed structure. The integrally formed structure may be formed through integral stamping or integral casting. The current collecting body 133 and the thickened portion 131 are configured as an integrated structure, which not only makes it possible to omit the process of assembling the current collecting body 133 and the thickened portion 131, but also improves the efficiency of assembling the cylindrical battery cell 100; and the connection strength may be more reliable.

In addition, please refer to FIG. 4 and FIG. 5. In an example of the cylindrical battery cell 100 of the present disclosure, unlike the integral molding, the current collecting body 133 and the thickened portion 131 may be connected by welding. One end of the thickened portion 131 away from the cap 140 is welded and connected to the current collecting body 133. There is no specific limitation to the welding connection method, which may be any method such as penetration welding or seam welding as long as the requirement of stable connection and current diversion between the current collecting body 133 and the thickened portion 131 can be satisfied. Since the current collecting body 133 and the thickened portion 131 are connected by welding, the molding process of the current collecting body 133 and the thickened portion 131 is relatively simple, and combinations of different thicknesses may be employed, so the process adaptability is relatively good.

Please refer to FIG. 3 to FIG. 5. In an example of the cylindrical battery cell 100 of the present disclosure, the maximum thickness of the current collecting component 130 is T, and in the thickness direction of the current collecting component 130, the thickness T between one end of the current collecting component 130 close to the electrode assembly 120 and one end where the thickened portion 131 is welded to the cap 140 is preferably greater than half of the thickness of the cap 140. For example, the thickness of the cap 140 is 0.6 mm, then the thickness T may range from 0.3 mm to 2 mm, preferably from 0.60 mm to 1.0 mm, more preferably from 0.60 mm to 0.65 mm, for example, may be 0.60 mm, 0.62 mm, 0.65 mm, etc. If the value of thickness T is too large, the thickness T will occupy more internal space of the housing 110, which affects the volumetric energy density of the battery cell. If the value of thickness T is too small, it would be difficult to effectively reduce the probability of the current collecting component 130 being welded through, which affects the quality of welding between the current collecting component 130 and the cap 140. After conducting a large number of process experiments and research, it is found that by setting the thickness T in the range of 0.60 mm to 0.65 mm, the volumetric energy density of the battery cell will not be reduced due to occupation of a large internal space of the housing 110, and the welding penetration problem will not easily occur due to the thin thickness of the current collecting component 130. In this way, a better welding quality may be obtained.

Specifically, when the thickened portion 131 and the current collecting body 133 are welded and connected, a variety of welding connection methods may be used. Please refer to FIG. 4. In an example of the cylindrical battery cell 100 of the present disclosure, the thickened portion 131 is located on one side of the current collecting body 133 away from the electrode assembly 120, and one end of the thickened portion 131 close to the current collecting body 133 is welded and connected to one side of the current collecting body 133 away from the electrode assembly 120. By employing this welding connection structure, before the current collecting component 130 is loaded into the housing, laser penetration welding may be performed between the thickened portion 131 and the current collecting body 133 (the welding direction is as shown by the arrow in FIG. 4); in this way, the welding area is large, and the stability of the welding connection is good.

Please refer to FIG. 5. In another example of the cylindrical battery cell 100 of the present disclosure, a mounting through hole 1331 is opened along the thickness direction of the current collection body 133, and one end of the thickened portion 131 close to the electrode assembly 120 is inserted into the mounting through hole 1331, and the bottom side of the thickened portion 131 may be aligned with the bottom side of the current collecting body 133. Such configuration facilitates the configuration and positioning of the thickened portion 131 on the current collecting body 133, and the thickened portion 131 and the current collecting body 133 are connected by seam welding (the welding position is shown by the arrow in FIG. 5). By observing the welding mark, it is possible to intuitively and visually check the quality of the welding connection, so as to detect quality problems in welding connections in a timely manner, so that early intervention may be carried out to prevent risks in subsequent use of the battery cell.

Specifically, the cap 140 may be made of a variety of materials, such as copper, iron, aluminum, steel, aluminum alloy, etc. In order to facilitate the welding connection, correspondingly, the material of the current collecting component 130 welded to the cap 140 may also be changed along with the change of the material of the cap 140. In order to ensure the strength and conductivity performance of the cap 140, in an example of the cylindrical battery cell 100 of the present disclosure, the cap 140 is made of low carbon steel. Correspondingly, the material of the current collecting component 130 is also made of low carbon steel. With such configuration, welding may be easily carried out for the two with the same material and the quality of welding is better. In another embodiment, it may be that only the thickened portion 131 is made of low carbon steel, and the current collecting body 133 is made of flexible metal, such as copper. Such configuration not only facilitates the welding between the thickened portion 131 and the cap 140 and ensures the quality of welding, but also allows the current collecting body 133 to have a certain degree of flexibility, which may reduce the influence of deformation stress on the tab welding region during the welding process of the cap 140.

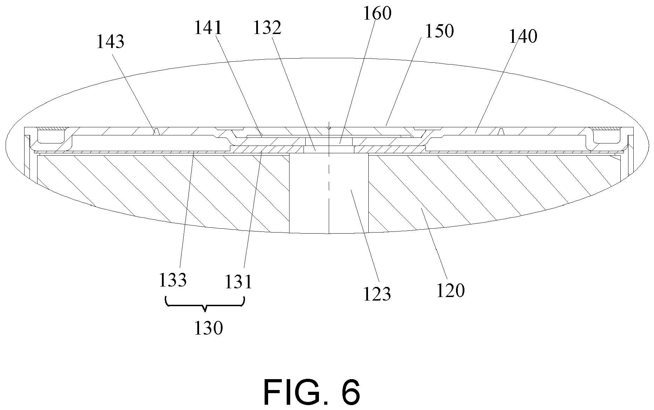

Please refer to FIG. 6. In an example of the cylindrical battery cell 100 of the present disclosure, a liquid injection hole 160 is disposed in the central region of the cap 140, and an opening 132 is disposed in the central region of the current collecting component 130. The liquid injection hole 160 and the opening 132 are disposed concentrically or substantially concentrically with the central hole 123 of the electrode assembly 120. The cylindrical battery cell 100 further includes a cover plate 150, which is disposed on the cap 140 to seal the liquid injection hole 160. There is no limitation to the way in which the cover plate 150 seals the liquid injection hole 160. For example, the cover plate 150 may be adhesively connected to the liquid injection hole 160, or may be clamped to the liquid injection hole 160 through an interference fit. The liquid injection hole 160 may also be sealed through seal-welding as long as the requirement of sealing the liquid injection hole 160 can be met. Through such configuration, when liquid is injected, not only that it is possible to position the circumferential direction of the liquid injection hole 160 conveniently and accurately, but also the problem that eccentric liquid injection in the electrode assembly 120 affects the uniformity of the liquid injection may be solved. Along the axial direction of the electrode assembly 120, the projection of the liquid injection hole 160 on the end surface of the current collecting component 130 covers the opening 132 or falls within the opening 132 to achieve communication between the liquid injection hole 160 and the opening 132. When the electrolyte is injected from the liquid injection hole 160, the electrolyte may enter the interior of the battery cell through the opening 132 and infiltrate the electrode assembly 120. The liquid injection hole 160 and the opening 132 may be formed into a variety of shapes, for example, they may be circular, rectangular, or strip-shaped as long as the requirement of liquid injection can be met. Please refer to FIG. 6. In an embodiment of the present disclosure, the projection of the liquid injection hole 160 on the end surface of the current collecting component 130 completely falls within the opening 132. Such configuration prevents the electrolyte from contacting the welding region of the cap 140 and the current collecting component 130 during the injection process, thereby preventing welding slag in the welding region from being flushed into the interior of the electrode assembly 120 and affecting the injection effect of the electrode assembly 120.

The diameter of the liquid injection hole 160 may be 1 mm to 14 mm. Considering the operation of the liquid injection process, the diameter of the liquid injection hole 160 is preferably smaller than the diameter of the central hole 123 of the electrode assembly 120. In an example of the cylindrical battery cell 100 of the present disclosure, the diameter of the liquid injection hole 160 may be any value from 2 mm to 7 mm, for example, the value may be 2 mm, 3 mm, 4 mm or 7 mm and so on.

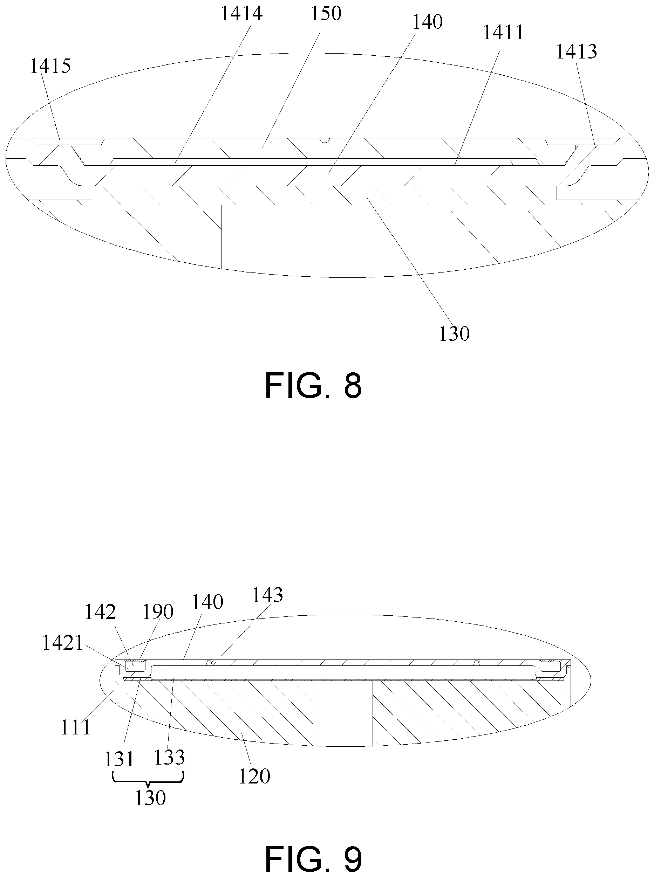

Please refer to FIG. 9. In an example of a cylindrical battery cell of the present disclosure, along the height direction of the liquid injection hole 160, an extension portion is disposed along the circumferential side wall of the liquid injection hole 160 at one end of the liquid injection hole 160 close to the electrode assembly 120. The extension portion 161 extends downward into the interior of the opening 132; the extension portion 161 includes an inner hole wall 1611 and an outer hole wall 1612 along the radial direction, and the inner hole wall 1611 is close to the center of the liquid injection hole 160. The outer hole wall 1612 may be attached to the side wall of the opening 132, or a gap may be present between the outer hole wall 1612 and the side wall of the opening 132. In the present disclosure, there is no limitation to the depth at which the extension portion extends into the opening 132, and the depth may be larger than the height of the opening 132, or may be smaller than or equal to the height of the opening 132. By disposing the extension portion 161, the height of the side wall of the liquid injection hole 160 is increased, which facilitates the temporary sealing of the liquid injection hole 160 during the liquid injection process.

In an example of the cylindrical battery cell 100 of the present disclosure, the cover plate 150 is disposed on one side of the cap 140 away from the electrode assembly 120, and the cover plate 150 covers the welding connection region between the cap 140 and the thickened portion 131. There is no limitation to the shape of the cover plate 150, and the shape may be circular, rectangular or annular and so on as long as the cover plate 150 can cover the welding connection region. Since the nickel plating layer on the surface of cap 140 in the welding region will be spoiled by high temperature of welding, the surface of the cap 140 in the welding region are very likely to be oxidized, and the welding marks are very likely to be corroded, resulting in failure of the welding connection. By disposing the cover plate 150 above the welding connection region, it is possible to prevent the welding connection region from contacting the air in the surroundings and reduce the degree of corrosion of the welding marks. In this way, it is possible to decrease the probability of failure of the welding connection between the cap 140 and the current collecting component 130, and prolong the service life of the cylindrical battery cell 100.

Please further refer to FIG. 6. In an example of the cylindrical battery cell 100 of the present disclosure, the liquid injection hole 160 is located at the center of the welding connection region between the cap 140 and the cover plate 150, and the projection of the cover plate 150 on the cap 140 covers the welding connection region. With such configuration, the cover plate 150 is able to simultaneously seal the liquid injection hole 160 and protect the welding mark in the welding connection region.

Please refer to FIG. 3, FIG. 7 and FIG. 8. In an example of the cylindrical battery cell 100 of the present disclosure, the cap 140 includes a cover body 144 and a recessed portion 141. In the thickness direction of the cap 140, the recessed portion 141 is recessed toward the electrode assembly 120 side. The recessed portion 141 includes a cavity bottom wall 1411, and the cavity bottom wall 1411 is welded and connected to one end of the thickened portion 131 away from the electrode assembly 120. In an embodiment of the present disclosure, there is no specific limitation to the relative positions of the recessed portion 141 and the cover body 144. For example, the recessed portion 141 may be disposed in the central region of the cover body 144 or in the periphery region of the cover body 144 as long as the requirement of welding and connecting the recessed portion 141 and the thickened portion 131 can be met. In the meantime, there is no specific limitation to the size of area of the recessed portion 141 as long as the requirement of welding strength between the cavity bottom wall 1411 and the thickened portion 131 can be met. By disposing the recessed portion 141 on the cap 140, the cavity bottom wall 1411 is in contact with the current collecting component 130. Such configuration makes a part of the region of the cap 140 contact the surface of the current collecting component 130, thereby improving the adhesion of the contact surface between the cap 140 and the current collecting component 130. In this way, the stability of welding connection between the cap 140 and the current collecting component 130 may be improved. In the meantime, because the recessed portion 141 is able to form a fixed distribution area of welding marks on the cap 140, it is possible to easily detect welding position errors occurring during the welding process in a timely manner.

Please refer to FIG. 3, FIG. 7 and FIG. 8. In an embodiment of the present disclosure, the recessed portion 141 is a disc-shaped structure and is coaxially disposed with the cap 140. On the one hand, such design saves the need to assemble the cap 140 at a specified angle in the circumferential direction, the recessed portion 141 may be in contact with the thickened portion 131 below for welding, which improves the assembly efficiency of the cap 140. On the other hand, when the cap 140 and the current collecting component 130 are welded, the force may be evenly applied in the circumferential direction, which may reduce the stress deformation of the current collecting component 130.

Specifically, as long as the projection of the recessed portion 141 and the projection of the thickened portion 131 overlap in the thickness direction of the current collecting component 130, the welding connection between the recessed portion 141 and the thickened portion 131 may be achieved. However, preferably, please refer to FIG. 6. In an example of the cylindrical battery cell 100 of the present disclosure, in the thickness direction of the current collecting component 130, the projection of the thickened portion 131 covers the projection of the recessed portion 141. With such configuration, a larger welding contact area may be obtained and the stability of the welding connection may be improved. In the meantime, during the battery cell assembly process, even if a deviation error occurs in the radial direction between the recessed portion 141 and the thickened portion 131, there will be no influence on the welding effect of the cap 140 and current collecting component 130.

Please refer to FIG. 3, FIG. 7 and FIG. 8. In an example of the cylindrical battery cell 100 of the present disclosure, the cap 140 includes a cover body 144 and an annular groove 142. The annular groove 142 is disposed on the outer periphery of the cap 140, and the annular groove 142 is recessed toward the electrode assembly 120 side in the thickness direction of the cap 140. The annular groove 142 and the cover 144 are formed integrally. The annular groove 142 includes an annular bottom wall 1421, as well as first annular side walls 1422 and second annular side walls 1423 located on two sides of the annular bottom wall 1421 in the radial direction, and the first annular side wall 1422 is close to the center of the end wall 111. A position-limiting portion 1424 is disposed at one end of the second annular side wall 1423 away from the annular bottom wall 1421, and the position-limiting portion 1424 extends toward one side away from the center of the cap 140. The position-limiting portion 1424 may be an integral annular structure connected to the outer peripheral surface of the second annular side wall 1423, or may be a plurality of sheet-like structures disposed at intervals on the outer peripheral surface of the second annular side wall 1423; there is no limitation to the method of connecting the position-limiting portion 1424 and the second annular side wall 1423, and the connection may be carried out through bolts, integral connection, welding connection, etc. One end surface of the position-limiting portion 1424 facing the annular bottom wall 1421 is in contact with the end surface of the side wall 112 of the housing 110 for welding connection, and the outer surface of the second annular side wall 1423 is in contact with the inner surface of the side wall 112 of the housing 110 for welding connection. The configuration of the position-limiting portion 1424 and the second annular side wall 1423 makes it possible to, on the one hand, improve the configuration accuracy of the cap 140 in the axial and radial directions of the housing 110, and improve the consistency of product assembly accuracy. On the other hand, when laser welding is performed on the outside of housing 110 where the position-limiting portion 1424 is contact with the end surface of the side wall 112 of the housing 110 in the radial direction, the molten weld pool will adhere to the position-limiting portion 1424 and the second annular side wall 1423 simultaneously, thereby increasing the welding connection area between cap 140 and the housing 110, and thus improving the welding connection strength and sealing performance. Meanwhile, because the molten weld pool is attached to the second annular side wall 1423, it is possible to prevent the welding slag generated when the housing 110 is welded through from falling into the interior of the housing 110 and affecting the working performance of the battery cell.

Referring to FIG. 3 and FIG. 9, in an example of the cylindrical battery cell 100 of the present disclosure, the outer surface of the annular bottom wall 1421 of the annular groove 142 is in contact with the circumferential outer periphery of the current collecting component 130. With such configuration, the annular bottom wall 1421 generates a downward pressing force on the outer periphery of the current collecting component 130, so that the first tab 121 below the current collecting component 130 may be tightly pressed to limit the local displacement of the first tab 121 in the axial direction and prevent the first tab 121 from loosening.

Please refer to FIG. 9. Different from the example in FIG. 6 in which the thickened portion 131 is disposed in the central region of the current collecting component 130, in an example of the cylindrical battery cell 100 of the present disclosure, the thickened portion 131 is disposed in the outer peripheral region of the current collecting component 130, and the annular bottom wall 1421 is in contact with the upper end surface of the thickened portion 131 to perform welding in the region of the annular groove 142 to realize the welding connection between the cap 140 and the current collecting component 130. Such configuration makes the welding region between the cover plate 150 and the current collecting component 130 to be located at the outer peripheral region of the cap 140. When a venting notch 143 is disposed on the cap 140, the welding region does not affect the opening of the venting notch 143, which facilitates discharge of the highpressure gas from the venting position.

Please continue to refer to FIG. 9. The cylindrical battery cell 100 further includes an annular cover plate 190. The annular cover plate 190 is disposed above the annular groove 142 to cover the annular groove 142. There are many options for disposing the annular cover plate 190 on the cap 140, such as through an adhesive connection or a welded connection, as long as the annular groove 142 can be covered and the requirement of stably connecting the annular cover plate 190 on the annular groove 142 can be met. By disposing the annular cover plate 190 to cover the annular groove 142, it is possible to reduce the degree of oxidation and corrosion of the welding mark in the annular groove 142, thus reducing the probability of failure of welding connection between the cap 140 and the current collecting component 130, and prolonging the service life of the cylindrical battery cell 100.

Please refer to FIG. 8 and FIG. 9. In an example of the cylindrical battery cell 100 of the present disclosure, a venting notch 143 is processed on the cover body 144 of the cap 140. The venting notch 143 may be a continuous annular structure or a discontinuous structure. The venting notch 143 is located in a fragile region of the cap 140. When the air pressure inside the cylindrical battery cell 100 exceeds a certain threshold, the position where the venting notch 143 is located will be ruptured, and the air pressure inside the cylindrical battery cell 100 will be discharged from the rupture, thereby preventing heat from spreading laterally in cylindrical batteries to cause more dramatic consequences. Preferably, in an embodiment of the present disclosure, the venting notch 143 has a circular structure and may be disposed coaxially with the cap 140. In this way, the force is applied on the venting notch 143 more evenly in the circumferential direction, thus ensuring that the venting notch 143 is opened in a more timely and accurate manner.

Please refer to FIG. 3 and FIG. 8. The venting notch 143 is located on one side of the cap 140 facing the electrode assembly 120. The venting notch 143 is perpendicular to the surface of the cap 140 in a depth direction. The cross-section of the venting notch 143 may be an inverted cone structure, and one end with a large diameter faces the electrode assembly 120 side. Since the nickel plating layer on the surface of the cap 140 will be spoiled by the venting notch 143, corrosion is likely to occur at the position where the venting notch 143 is located, which affects the pressure for opening the venting notch 143. By disposing the venting notch 143 on one side facing the electrode assembly 120 so that the venting notch 143 is located in a closed space in the housing 110, it is possible to reduce the chance that venting notch 143 is in contact with the air. In this way, the degree of corrosion of the venting notch 143 may be reduced and the service life of the venting notch 143 may be improved.

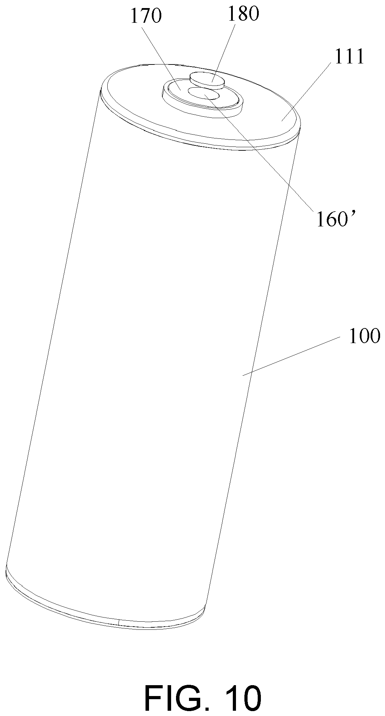

It should be noted that the liquid injection hole in the above embodiment may not be disposed on the cap 140, but may be disposed on the end wall 111 side of the housing 110, which also serves the function of injecting liquid into the interior of the electrode assembly 120. Please refer to FIG. 10. In an embodiment of the present disclosure, a liquid injection hole 160' is disposed on the electrode terminal 170, and the electrolyte enters the interior of the electrode assembly 120 through the liquid injection hole 160'. A blocking plate 180 is also disposed on the electrode terminal 170. The blocking plate 180 seals the liquid injection hole 160' to prevent the electrolyte from overflowing from the liquid injection hole 160'. The liquid injection hole 160' is disposed on the electrode terminal 170. On the one hand, the liquid injection hole 160' and the cap 140 are respectively located at two ends of the housing 110. Therefore, the welding slag generated when the cap 140 is welded to the current collecting component 130 will not enter the interior of the battery cell from the liquid injection hole 160' and contaminate the electrolyte, thereby improving the working life of the cylindrical battery cell 100. On the other hand, when the blocking plate 180 seals the liquid injection hole 160' by welding, the welding region is far away from the second tab 122, so the second tab 122 is less affected by thermal impact in the welding process. In the meantime, during welding, since the electrode terminal 170 itself has a certain thickness, the electrode terminal 170 is able to alleviate transfer of the heat energy generating from welding into the interior of the battery cell, thereby reducing the probability of thermal decomposition of the electrolyte. In another embodiment, the liquid injection hole may also be opened on the end wall 111 of the housing 110, which may also prevent the welding slag generated when the cap 140 and the current collecting component 130 are welded and connected from entering the interior of the battery cell from the liquid injection hole and contaminating the electrolyte. It should be noted that in an embodiment of the present disclosure, the electrode terminal 170 is positively charged and serves as a positive electrode terminal of the cylindrical battery cell 100, and the housing 110 is negatively charged as a whole and serves as a negative electrode terminal of the cylindrical battery cell 100. In other embodiments, it may also be that the electrode terminal 170 is negatively charged and serves as a negative electrode terminal of the cylindrical battery cell 100, and the housing 110 is positively charged as a whole and serves as a positive electrode terminal of the cylindrical battery cell 100.

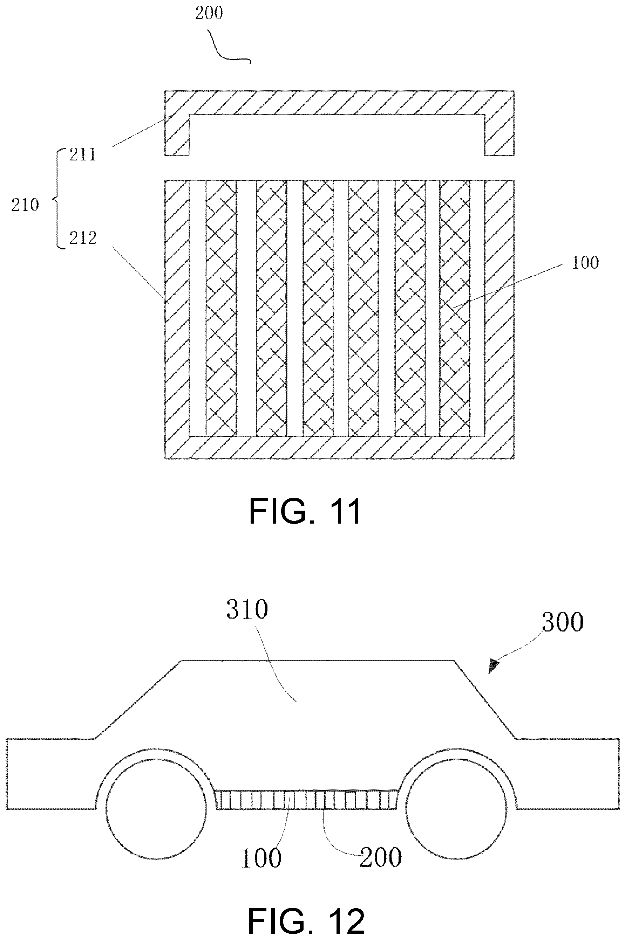

Please refer to FIG. 11. In an embodiment of the battery pack 200 of the present disclosure, the battery pack 200 includes a case body 210 and at least one cylindrical battery cell 100; the case body 210 includes a first case body portion 211 and a second case body portion 212. The first case body portion 211 and the second case body portion 212 cover each other to form an accommodation space. Multiple cylindrical battery cells 100 are accommodated in the accommodation space. The multiple cylindrical battery cells 100 may be connected in series and/or in parallel.

Please refer to FIG. 12. In an example of the electronic device 300 of the present disclosure, the electronic device 300 includes a working portion 310 and a battery pack 200. The working portion 310 is electrically connected to the battery pack 200 to obtain electrical energy for support. The working portion 310 may be a unit component that is able to obtain the electric energy of the battery pack 200 and perform corresponding work, such as a blade rotating unit of a fan, a dust collection working unit of a vacuum cleaner, a wheel driving unit in an electric vehicle, etc. The electrical device 300 may be vehicles, cell phones, portable devices, laptops, ships, spacecraft, electric toys and power tools, etc. Vehicles may be fuel vehicles, gas vehicles or new energy vehicles, and new energy vehicles may be pure electric vehicles, hybrid vehicles or extended-range vehicles, etc.; spacecraft include aircraft, rockets, space shuttles, spaceships, etc.; electric toys include fixed type or mobile electric toys, such as game consoles, electric toy cars, electric toy ships and electric toy airplanes, etc.; electric tools include metal cutting electric tools, grinding electric tools, assembly electric tools and railway electric tools, for example, electric drills, electric grinders, electric wrenches, electric screwdrivers, electric hammers, impact drills, concrete vibrators, planers and more. The embodiments of this disclosure impose no special limitation to the above-mentioned electrical device 300. In an embodiment of the electronic device 300 of the present disclosure, the electronic device 300 is a vehicle, the working portion 310 is the vehicle body, and the battery pack 200 is fixedly disposed on the vehicle body to provide driving force for the vehicle and realize the operation of the vehicle.

In the cylindrical battery cell of this disclosure, by disposing a thickened portion on the current collecting component, the thickness of the current collecting component at the position of welding with the cap is increased, thus reducing the risk of false welding or welding penetration at the welding position during laser penetration welding. In this way, it is possible to effectively reduce the difficulty of welding the current collecting component and the cap, and solve the problem of low process window in welding and effectively improve the quality of welding, as well as reduce the defect rate of welding the cap and the current collecting component. In the meantime, the configuration of the thickened portion may also effectively reduce the heat generated during the welding process of the current collecting component and the cap to be transmitted to the electrode assembly, and therefore there is less thermal impact on the electrode assembly. Additionally, the thickened portion is in contact with a part of the region of the cap, so that there is a better adhesion in the contact surface therebetween. In this way, it is possible to further reduce the chance of false welding and missing welding when performing welding to connect the current collecting component and the cap, and therefore the welding quality may be improved, and the defect rate of welding may be reduced. In this way, the present disclosure effectively overcomes some practical problems in the related art and has high value of utilization and great significance of use.

## Claims

1. A cylindrical battery cell (100), **characterized by** comprising:
a housing (110) comprising an end wall (111) and a side wall (112) surrounding the end wall (111), wherein an opening (113) is formed on one side of the side wall (112) facing away from the end wall (111);
an electrode assembly (120) disposed in the housing (110), wherein a first tab (121) is provided on one side of the electrode assembly (120) facing the opening (113);
a cap (140) disposed on a side where the opening (113) located, and is welded and connected to the side wall (112) to seal the opening (113); and
a current collecting component (130) disposed on one side of the electrode assembly (120) facing the opening (113), wherein the current collecting component (130) is welded and connected to the first tab (121);
wherein in a thickness direction of the current collecting component (130), the current collecting component (130) comprises a current collecting body (133) and a thickened portion (131) protruding toward the cap (140), and the thickened portion (131) is welded and connected to the cap (140).

2. The cylindrical battery cell (100) according to claim 1, **characterized in that** the thickened portion (131) is disposed in a central region of the current collecting component (130).

3. The cylindrical battery cell (100) according to claim 2, **characterized in that** in the thickness direction of the current collecting component (130), a projection of the thickened portion (131) on the electrode assembly (120) is located in a region with a center of the electrode assembly (120) as the center and having a diameter of 18 mm.

4. The cylindrical battery cell (100) according to claim 1, **characterized in that** the current collecting body (133) and the thickened portion (131) are an integrally formed structure.

5. The cylindrical battery cell (100) according to claim 1, **characterized in that** the current collecting body (133) and the thickened portion (131) are welded and connected.

6. The cylindrical battery cell (100) according to claim 5, **characterized in that** in the thickness direction of the current collecting component (130), a thickness between one end of the current collecting component (130) close to the electrode assembly (120) and one end where the thickened portion (131) is welded to the cap (140) is 0.3 mm to 2 mm.

7. The cylindrical battery cell (100) according to claim 5, **characterized in that** the thickened portion (131) is disposed on one side of the current collecting body (133) away from the electrode assembly (120).

8. The cylindrical battery cell (100) according to claim 5, **characterized in that** in a thickness direction of the current collecting body (133), the thickened portion (131) penetrates through the current collecting body (133).

9. The cylindrical battery cell (100) according to claim 1, **characterized in that** at least one of the current collecting body (133) and the thickened portion (131) is made of low carbon steel.

10. The cylindrical battery cell (100) according to any one of claims 1-6, **characterized in that** a center of the cap (140) comprises a liquid injection hole (160, 160'), and a center of the current collecting component (130) comprises an opening (132) corresponding to the liquid injection hole (160, 160'), and the cylindrical battery cell (100) further comprises a cover plate (150) disposed above the cap (140), the cover plate (150) is welded and connected to the cap (140) to seal the liquid injection hole (160, 160').

11. The cylindrical battery cell (100) according to claim 10, **characterized in that** the cover plate (150) covers a welding connection region between the cap (140) and the thickened portion (131).

12. The cylindrical battery cell (100) according to claim 1, **characterized in that** in a thickness direction of the cap (140), the cap (140) comprises a recessed portion (141) that is recessed toward the current collecting component (130), and the recessed portion (141) is welded and connected to the thickened portion (131).

13. The cylindrical battery cell (100) according to claim 12, **characterized in that** in the thickness direction of the current collecting component (130), a projection of the thickened portion (131) covers a projection of the recessed portion (141).

14. The cylindrical battery cell (100) according to claim 1, **characterized in that** at least a part of a lower surface of the cap (140) located at an outer periphery is in contact with an end surface of the side wall (112) for welding connection, and in a thickness direction of the cap (140), an annular groove (142) that is recessed toward the electrode assembly (120) side is further disposed at the outer periphery of the cap (140), a side wall (1423) of the annular groove (142) away from a center of the cap (140) is in contact with an inner surface of the side wall (112) for welding connection.

15. The cylindrical battery cell (100) according to claim 14, **characterized in that** a bottom wall (1421) of the annular groove (142) is in contact with the current collecting component (130).

16. The cylindrical battery cell (100) according to claim 14, **characterized in that** the thickened portion (131) is disposed at an outer periphery region of the current collecting component (130), and a bottom wall (1421) of the annular groove (142) is in contact with the thickened portion (131) for welding connection.

17. The cylindrical battery cell (100) according to claim 14, **characterized in that** the cylindrical battery cell (100) further comprises an annular cover plate (190), and the annular cover plate (190) is disposed above the annular groove (142) to cover the annular groove (142).

18. The cylindrical battery cell (100) according to claim 1, **characterized in that** a venting notch (143) is further disposed on the cap (140).

19. The cylindrical battery cell (100) according to claim 1, **characterized in that** a second tab (122) is disposed on one side of the electrode assembly (120) facing the end wall, (111) and the cylindrical battery cell (100) further comprises an electrode terminal (170) protruding from an outer surface of the end wall (111), the electrode terminal (170) is electrically connected to the second tab (122), and a liquid injection hole (160, 160') is disposed on the end wall (111) or the electrode terminal (170).

20. A battery pack (200), **characterized by** comprising the cylindrical battery cell (100) according to any one of claims 1-19.

## Amended claims

### Amended claims in accordance with Rule 137(2) EPC.

1. A cylindrical battery cell (100), **characterized by** comprising:
a housing (110) comprising an end wall (111) and a side wall (112) surrounding the end wall (111), wherein an opening (113) is formed on one side of the side wall (112) facing away from the end wall (111);
an electrode assembly (120) disposed in the housing (110), wherein a first tab (121) is provided on one side of the electrode assembly (120) facing the opening (113);
a cap (140) disposed on a side where the opening (113) located, and is welded and connected to the side wall (112) to seal the opening (113); and
a current collecting component (130) disposed on one side of the electrode assembly (120) facing the opening (113), wherein the current collecting component (130) is welded and connected to the first tab (121);
wherein in a thickness direction of the current collecting component (130), the current collecting component (130) comprises a current collecting body (133) and a thickened portion (131) protruding toward the cap (140), and the thickened portion (131) is welded and connected to the cap (140),
wherein a thickness of the thickened portion (131) is greater than a thickness of the current collecting body (133).

2. The cylindrical battery cell (100) according to claim 1, **characterized in that** the thickened portion (131) is disposed in a central region of the current collecting component (130).

3. The cylindrical battery cell (100) according to claim 2, **characterized in that** in the thickness direction of the current collecting component (130), a projection of the thickened portion (131) on the electrode assembly (120) is located in a region with a center of the electrode assembly (120) as the center and having a diameter of 18 mm.

4. The cylindrical battery cell (100) according to claim 1, **characterized in that** the current collecting body (133) and the thickened portion (131) are an integrally formed structure.

5. The cylindrical battery cell (100) according to claim 1, **characterized in that** the current collecting body (133) and the thickened portion (131) are welded and connected.

6. The cylindrical battery cell (100) according to claim 5, **characterized in that** in the thickness direction of the current collecting component (130), a thickness between one end of the current collecting component (130) close to the electrode assembly (120) and one end where the thickened portion (131) is welded to the cap (140) is 0.3 mm to 2 mm.

7. The cylindrical battery cell (100) according to claim 5, **characterized in that** the thickened portion (131) is disposed on one side of the current collecting body (133) away from the electrode assembly (120).

8. The cylindrical battery cell (100) according to claim 5, **characterized in that** in a thickness direction of the current collecting body (133), the thickened portion (131) penetrates through the current collecting body (133).

9. The cylindrical battery cell (100) according to claim 1, **characterized in that** at least one of the current collecting body (133) and the thickened portion (131) is made of low carbon steel.

10. The cylindrical battery cell (100) according to any one of claims 1-6, **characterized in that** a center of the cap (140) comprises a liquid injection hole (160, 160'), and a center of the current collecting component (130) comprises an opening (132) corresponding to the liquid injection hole (160, 160'), and the cylindrical battery cell (100) further comprises a cover plate (150) disposed above the cap (140), the cover plate (150) is welded and connected to the cap (140) to seal the liquid injection hole (160, 160').

11. The cylindrical battery cell (100) according to claim 10, **characterized in that** the cover plate (150) covers a welding connection region between the cap (140) and the thickened portion (131).

12. The cylindrical battery cell (100) according to claim 1, **characterized in that** in a thickness direction of the cap (140), the cap (140) comprises a recessed portion (141) that is recessed toward the current collecting component (130), and the recessed portion (141) is welded and connected to the thickened portion (131).

13. The cylindrical battery cell (100) according to claim 12, **characterized in that** in the thickness direction of the current collecting component (130), a projection of the thickened portion (131) covers a projection of the recessed portion (141).

14. The cylindrical battery cell (100) according to claim 1, **characterized in that** at least a part of a lower surface of the cap (140) located at an outer periphery is in contact with an end surface of the side wall (112) for welding connection, and in a thickness direction of the cap (140), an annular groove (142) that is recessed toward the electrode assembly (120) side is further disposed at the outer periphery of the cap (140), a side wall (1423) of the annular groove (142) away from a center of the cap (140) is in contact with an inner surface of the side wall (112) for welding connection.

15. The cylindrical battery cell (100) according to claim 14, **characterized in that** a bottom wall (1421) of the annular groove (142) is in contact with the current collecting component (130).

16. The cylindrical battery cell (100) according to claim 14, **characterized in that** the thickened portion (131) is disposed at an outer periphery region of the current collecting component (130), and a bottom wall (1421) of the annular groove (142) is in contact with the thickened portion (131) for welding connection.

17. The cylindrical battery cell (100) according to claim 14, **characterized in that** the cylindrical battery cell (100) further comprises an annular cover plate (190), and the annular cover plate (190) is disposed above the annular groove (142) to cover the annular groove (142).

18. The cylindrical battery cell (100) according to claim 1, **characterized in that** a venting notch (143) is further disposed on the cap (140).

19. The cylindrical battery cell (100) according to claim 1, **characterized in that** a second tab (122) is disposed on one side of the electrode assembly (120) facing the end wall, (111) and the cylindrical battery cell (100) further comprises an electrode terminal (170) protruding from an outer surface of the end wall (111), the electrode terminal (170) is electrically connected to the second tab (122), and a liquid injection hole (160, 160') is disposed on the end wall (111) or the electrode terminal (170).

20. A battery pack (200), **characterized by** comprising the cylindrical battery cell (100) according to any one of claims 1-19.
